# EUROPEAN PATENT APPLICATION

(11) **EP 4 654 447 A1**
(43) Date of publication of application: **26.11.2025**
(21) Application number: 25172542.0
(22) Date of filing: 25.04.2025
(51) Int. Cl.: H02K 11/40, H02K 5/15

(54) **ELECTRIC MOTOR FOR HOUSEHOLD APPLIANCE, AND HOUSEHOLD APPLIANCE**

(30) Priority: 23.05.2024 CN 202421146555 U
(71) Applicant: BSH Hausgeräte GmbH, 81739 München (DE)
(72) Inventor: Yu, Jingliang, Nanjing, 210046 (CN); Yu, Jian, Suqian, 223600 (CN); Tong, Gan, Nanjing, 210046 (CN); Sun, Chen, Nanjing, 210046 (CN)

(57) **Abstract**

The embodiments of the utility model relate to the field of household appliances, and in particular, to an electric motor for a household appliance. The electric motor includes: an electric motor end cover (10); and a grounding structure, where the grounding structure includes: an insertion groove (20) provided in the electric motor end cover (10); and a conductive grounding lug (30) suitable to be inserted into the insertion groove (20) and establish electric connection to the insertion groove (20), where the grounding lug (30) is provided with a resilient elastic structure at an edge, the elastic structure is elastically compressible on at least one scale in a transverse direction relative to an insertion direction in which the grounding lug (30) is inserted into the insertion groove (20), and the grounding lug (30) in an inserted state of being inserted into the insertion groove (20) is locked in the insertion groove (20) with the aid of resilient action of the elastic structure. Through a technical solution of the utility model, a material cost of the electric motor can be reduced, an installation process can be simplified, and production efficiency can be improved. The utility model further provides a corresponding household appliance.

## Description

### TECHNICAL FIELD

The embodiments of the utility model relate to the field of household appliances, and in particular, to an electric motor for a household appliance, and a household appliance having the electric motor for a household appliance.

### BACKGROUND

In order to ensure the safety of an electric motor, the electric motor usually needs to be grounded by installing a grounding lug on its end cover conventionally. The grounding lug is generally fixed to the end cover through welding or bolt connection. The welding is probably infeasible due to the structure of the electric motor or its end cover, and the grounding lug is likely to loosen and fall off during use, which affects the use of the electric motor. In addition, the bolt connection requires bolt holes in the end cover and the grounding lug, and further requires at least one bolt to fixedly connect them. As a result, more processes and components are produced during manufacturing and installation, the cost is increased, and low production efficiency is caused.

It can be seen that there is still large room for improvement in the grounding treatment of the electric motor in the prior art.

### SUMMARY

An objective of embodiments of the utility model is to provide an electric motor for a household appliance, and a corresponding household appliance. According to at least one embodiment of the utility model, the shortcomings in the prior art can be at least partially overcome, a component cost of the electric motor can be reduced, manufacturing and installation processes can be simplified, and production efficiency can be improved.

According to an embodiment of the utility model, an electric motor for a household appliance is provided. The electric motor includes:
an electric motor end cover; and
a grounding structure, where the grounding structure includes: an insertion groove, the insertion groove being provided in the electric motor end cover; and a conductive grounding lug, the grounding lug being suitable to be inserted into the insertion groove and establish electric connection to the insertion groove, where the grounding lug is provided with a resilient elastic structure at an edge, the elastic structure is elastically compressible on at least one scale in a transverse direction relative to an insertion direction in which the grounding lug is inserted into the insertion groove, and the grounding lug in an inserted state of being inserted into the insertion groove is locked in the insertion groove with the aid of resilient action of the elastic structure.

According to this embodiment, the grounding lug can be inserted into the insertion groove with the aid of elastic compression of the elastic structure of the grounding lug, and then the grounding lug can be locked in the insertion groove with the aid of the resilient action of the elastic structure. Thus, the grounding lug can be installed into the insertion groove and be in close contact with an inner wall of the insertion groove merely with a structure of the grounding lug, without use of installation components such as bolts. Thus, the component cost can be reduced, installation complexity can be reduced, installation time can be shortened, and the production efficiency can be improved.

The extension and improvement solution of the technical solution of the utility model is learned from the following optional embodiments.

According to an optional embodiment of the electric motor for a household appliance of the utility model, the grounding lug has a plate-like grounding lug body, the elastic structure includes at least one snap-fit arm integrally protruding from the grounding lug body, and the grounding lug is inserted into the insertion groove through elastic deformation of the snap-fit arm and is snap-fitted in the insertion groove with the aid of resilient action of the elastically deformed snap-fit arm. Through this embodiment, the grounding lug can be installed and tightly fixed in the insertion groove with the aid of the integrally formed elastic structure, thus reducing a number of components and manufacturing and installation costs.

According to an optional embodiment of the electric motor for a household appliance of the utility model, the snap-fit arm includes at least one bent snap-fit arm that extends from a front end, in the insertion direction, of the grounding lug body and bends and extends backwards in the insertion direction. Through this embodiment, the elastic structure is achieved by simply bending the snap-fit arm extending from the grounding lug body, thus further reducing manufacturing and installation complexity and cost.

According to an optional embodiment of the electric motor for a household appliance of the utility model, the bent snap-fit arm has a bent connection portion that is integrally connected to the grounding lug body and bends backwards, and a snap-fit portion extending from the bent connection portion, and an included angle between the snap-fit portion and the grounding lug body is an acute angle. Through this embodiment, sufficient elastic compression and resilient locking action can be provided by using the bent snap-fit arm.

According to an optional embodiment of the electric motor for a household appliance of the utility model, the grounding lug has two bent snap-fit arms, and the two bent snap-fit arms are bent backwards from the front end towards an opposite side surface of the grounding lug body. Through this embodiment, it can further guarantee that the grounding lug is firmly locked in the insertion groove and is in close contact with the inner wall of the insertion groove.

According to an optional embodiment of the electric motor for a household appliance of the utility model, the snap-fit arm includes at least one protruding snap-fit arm obliquely extending from a side edge of the grounding lug body backwards in the insertion direction. Through this embodiment, the snap-fit arm integrated with the grounding lug body can be formed in another way.

According to an optional embodiment of the electric motor for a household appliance of the utility model, two protruding snap-fit arms are formed at each side edge of the grounding lug body.

According to an optional embodiment of the electric motor for a household appliance of the utility model, the protruding snap-fit arm has a conical degree that gradually decreases in size as the protruding snap-fit arm approaches a rear end in the insertion direction.

According to an optional embodiment of the electric motor for a household appliance of the utility model, an internal size, on a scale on which the grounding lug is suitable to be elastically compressed, of the insertion groove is less than an uncompressed natural size of the grounding lug on the corresponding scale;

According to an optional embodiment of the electric motor for a household appliance of the utility model, at an opening edge of an opening of the insertion groove, a step protruding towards an interior of the opening is formed at least a section corresponding to the snap-fit arm.

Through one or more optional embodiments, it can further that the grounding lug is firmly locked in the insertion groove and is in close contact with the inner wall of the insertion groove.

According to an optional embodiment of the electric motor for a household appliance of the utility model, the electric motor end cover includes an end cover body, a driving device installation portion arranged on the end cover body and used for installing an electric motor driving device, and a plurality of heat dissipation ribs protruding from an outer surface of the end cover body.

According to an optional embodiment of the electric motor for a household appliance of the utility model, the end cover body, the driving device installation portion, and the heat dissipation ribs are in an integral forming structure.

According to an optional embodiment of the electric motor for a household appliance of the utility model, the driving device installation portion is formed to protrude from a side of the end cover body farther away from the end cover body.

According to an optional embodiment of the electric motor for a household appliance of the utility model, a bearing chamber is formed on the end cover body.

According to an optional embodiment of the electric motor for a household appliance of the utility model, the grounding structure is arranged at the driving device installation portion.

According to an optional embodiment of the electric motor for a household appliance of the utility model, the insertion groove is formed in a side, farther away from the end cover body, of the driving device installation portion.

According to an optional embodiment of the electric motor for a household appliance of the utility model, the electric motor end cover further includes reinforcement ribs protruding from the end cover body in a greater extent than the plurality of heat dissipation ribs.

According to an optional embodiment of the electric motor for a household appliance of the utility model, the reinforcement rib is formed to be connected to the driving device installation portion and/or the insertion groove.

According to an optional embodiment of the electric motor for a household appliance of the utility model, the electric motor end cover is at least partially made from a conductive material, and the grounding lug is inserted into the insertion groove and establish electric connection to the electric motor end cover.

According to an optional embodiment of the electric motor for a household appliance of the utility model, the electric motor end cover is at least partially made from a conductive material, and the insertion groove is formed by removing part of the conductive material of the electric motor end cover.

According to an embodiment of the utility model, a household appliance is further provided. The household appliance includes the electric motor for a household appliance according to the embodiment of the utility model, where a grounding lug is connected to a grounding device through a wire.

More features of the utility model become apparent from the claims, the accompanying drawings and description of the accompanying drawings. The features and feature combinations mentioned in the description and the features and feature combinations mentioned in the following description of the accompanying drawings and/or shown merely in the accompanying drawings can be used in a corresponding specified combination, and can be further used in other combinations without departing from the scope of the utility model. Thus, the following contents are also regarded as being covered and disclosed by the utility model: these contents are not explicitly shown in the accompanying drawings and are not explicitly explained, but are derived from the combination of separated features from the explained contents and are generated by these combinations. The following contents and feature combinations are also regarded as being disclosed: contents without all the features of the original written independent claims. In addition, the following contents and feature combinations are regarded as being particularly disclosed by the above contents: contents falling beyond or departing from the feature combinations defined in the reference relationship of the claims.

### BRIEF DESCRIPTION OF THE DRAWINGS

The principle, features and advantages of the utility model can be better understood by describing the utility model in more detail below with reference to the accompanying drawings. The accompanying drawings include:
FIG. 1 schematically shows a perspective view of an electric motor end cover portion of an electric motor for a household appliance according to an embodiment of the utility model, where a grounding lug is to be inserted into an insertion groove;
FIG. 2(A) schematically shows a perspective view of a grounding lug of an electric motor for a household appliance according to an embodiment of the utility model, and FIG. 2(B) schematically shows a side view of the grounding lug in FIG. 2(A);
FIG. 3 schematically shows a sectional view, taken through a grounding structure, of an electric motor end cover of an electric motor for a household appliance according to an embodiment of the utility model;
FIG. 4 schematically shows a perspective view of an electric motor end cover portion of an electric motor for a household appliance according to another embodiment of the utility model, where a grounding lug is to be inserted into an insertion groove; and
FIG. 5 schematically shows a grounding structure of an electric motor for a household appliance according to another embodiment of the utility model, where a grounding lug is not inserted into an insertion groove.

### List of reference symbols

- 10: Electric motor end cover
- 11: End cover body
- 111: Bearing chamber
- 12: Driving device installation portion
- 13: Heat dissipation rib
- 14: Reinforcement rib
- 20: Insertion groove
- 21: Opening
- 30: Grounding lug
- 31: Grounding lug body
- 311: Front end
- 312: Side edge
- 32: Snap-fit arm
- 321: Bent snap-fit arm
- 3211: Bent connection portion
- 3212: Snap-fit portion
- 322: Protruding snap-fit arm

### DETAILED DESCRIPTION

To make technical problems to be solved, technical solutions and beneficial technical effects of the utility model clearer, the utility model will be further described below in detail in conjunction with the accompanying drawings and a plurality of illustrative embodiments. It should be understood that specific embodiments described herein are merely used for explaining the utility model rather than limiting the protection scope of the utility model. It should be noted that the orientation terms used in the description refer to the normal use state of an electric motor for a household appliance, for the convenience of description, and cannot be understood as absolute limitation on the corresponding features.

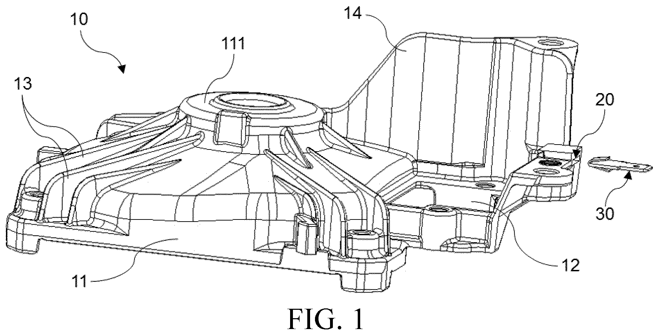

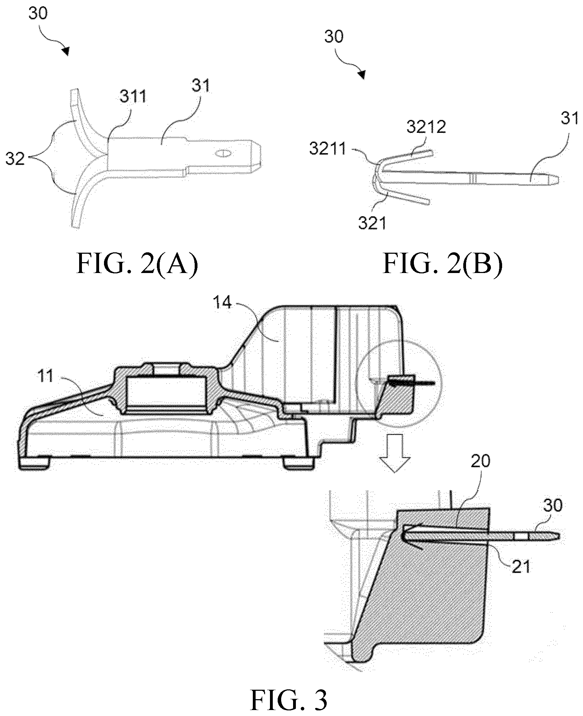

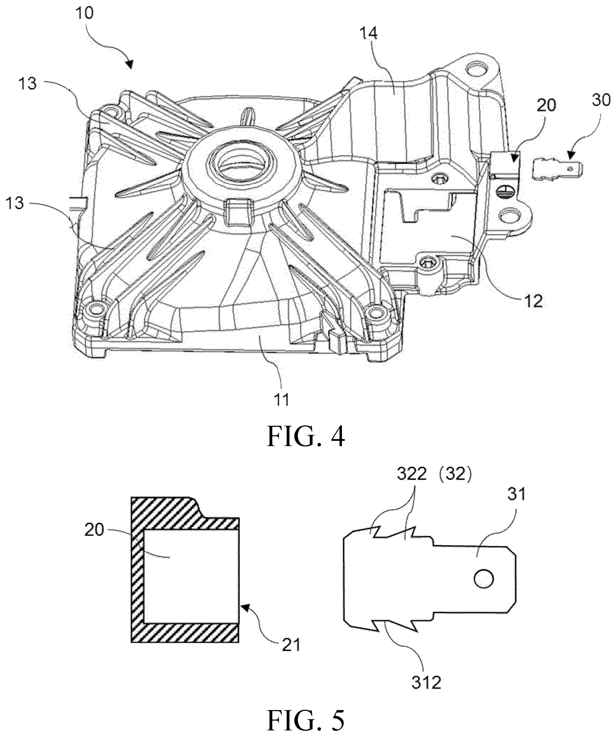

FIG. 1 schematically shows a perspective view of an electric motor end cover 10 portion of an electric motor for a household appliance according to an embodiment of the utility model, where a grounding lug 30 is not inserted into an insertion groove 20. FIG. 2(A) schematically shows a perspective view of a grounding lug 30 of an electric motor for a household appliance according to an embodiment of the utility model, and FIG. 2(B) schematically shows a side view of the grounding lug 30 in FIG. 2(A). FIG. 3 schematically shows a sectional view, taken through a grounding structure, of an electric motor end cover 10 of an electric motor for a household appliance according to an embodiment of the utility model, where a snap-fit arm as an elastic structure is shown in an enlarged view. FIG. 4 schematically shows a perspective view of an electric motor end cover 10 portion of an electric motor for a household appliance according to another embodiment of the utility model, where a grounding lug 30 is not inserted into an insertion groove 20. FIG. 5 schematically shows a grounding structure of an electric motor for a household appliance according to another embodiment of the utility model, where an insertion groove 20 is shown in a horizontal sectional view, and a grounding tab 30 is shown in a planar view, and the grounding lug 30 is not inserted into the insertion groove 20.

At first, as shown in FIG. 1, the electric motor for a household appliance according to an embodiment of the utility model includes the electric motor end cover 10. The electric motor end cover 10 is installed at an end of the electric motor and includes an end cover body 11, a driving device installation portion 12, a plurality of heat dissipation ribs 13, and reinforcement ribs 14. The end cover body 11 is formed in a cover shape, and a bearing chamber 111 for fixedly installing a bearing is formed on the end cover body. The driving device installation portion 12 is arranged on the end cover body 11, is especially formed to protrude from a side of the end cover body 11 farther away from the end cover body 11, and is suitable for installation of an electric motor driving device, such as a driving circuit board. The plurality of heat dissipation ribs 13 protrude from an outer surface of the end cover body 11 so as to increase a heat dissipation area of the electric motor end cover 10 and improve heat dissipation performance of the electric motor end cover 10. The reinforcement ribs 14 protrude from the end cover body 11 in a greater extent than the plurality of reinforcement ribs 13. Thus, a structural strength of the electric motor end cover 10 can be increased, and in addition, the heat dissipation area of the electric motor end cover 10 can be further increased, and the heat dissipation performance of the electric motor end cover 10 can be improved. In addition, the reinforcement rib 14 may be formed to be connected to the driving device installation portion 12 protruding farther away from the end cover body 11.

Preferably, the end cover body 11, the driving device installation portion 12, and the heat dissipation ribs 13 are in an integral forming structure. Optionally, the reinforcement rib 14 may alternatively be integrally formed with the end cover body 11, the driving device installation portion 12, and the heat dissipation rib 13. In addition, preferably, the electric motor end cover 10 may be at least partially made from a conductive material. That is, the end cover body 11, the driving device installation portion 12, the heat dissipation ribs 13, and/or the reinforcement ribs 14 may be integrally formed from the conductive material. The conductive material includes, for example, aluminum or aluminum alloy.

The electric motor for a household appliance according to an embodiment of the utility model further includes a grounding structure. The grounding structure includes the insertion groove 20 and the conductive grounding lug 30. The insertion groove 20 is formed on the electric motor end cover 10, and the grounding lug 30 is suitable to be inserted into the insertion groove 20 and establish electric connection to the insertion groove 20 and further establish electric connection to the electric motor end cover 10.

The grounding lug 30 is provided with a resilient elastic structure at an edge, the elastic structure is elastically compressible on at least one scale in a transverse direction relative to an insertion direction in which the grounding lug 30 is inserted into the insertion groove 20, and the grounding lug 30 may be inserted into the insertion groove 20 with the aid of elastic compression. The grounding lug 30 in an inserted state of being inserted into the insertion groove 20 is locked in the insertion groove 20 with the aid of resilient action of the elastic structure.

Specifically, As shown in FIG. 2(A) and FIG. 5, the grounding lug 30 has a plate-like grounding lug body 31, the elastic structure includes at least one snap-fit arm 32 integrally protruding from the grounding lug body 31, and the grounding lug 30 is inserted into the insertion groove 20 through elastic deformation of the clamping arm 32 and is snap-fitted in the insertion groove 20 with the aid of resilient action of the elastically deformed snap-fit arm 32.

As shown in FIG. 2(A) and FIG. 2(B), in a preferred illustrative embodiment, the snap-fit arm 32 includes at least one bent snap-fit arm 321 that extends from a front end 311, in the insertion direction, of the grounding lug body 31 and bends and extends backwards in the insertion direction. The bent snap-fit arm 321 has a bent connection portion 3211 that is integrally connected to the grounding lug body 31 and bends backwards, and a snap-fit portion 3212 further extending backwards from the bent connection portion 3211, and an included angle between the snap-fit portion 3212 and the grounding lug body 31 is an acute angle. Thus, elastic compressibility of the elastic structure can be provided through the bent connection portion 3211, and the grounding lug 30 can be easily inserted into the insertion groove 20. When the grounding lug 30 is in the inserted state of being inserted into the insertion groove 20, as shown schematically in FIG. 3, a tail end of the snap-fit portion 3212 is snap-fitted and stopped on an inner wall of the insertion groove 20 and is in close contact with the inner wall of the insertion groove 20 with the aid of resilient action of the bent connection portion 3211. Thus, the grounding lug 30 can be installed and fixed in the insertion groove 20, and stable electric connection can be established.

In a preferred embodiment, as shown in FIG. 2(A) and FIG. 2(B), the grounding lug 30 has two bent snap-fit arms 321, and the two bent snap-fit arms 321 are bent backwards from the front end 311 of the grounding lug 31 towards an opposite side surface of the grounding lug body 31. Thus, the elastic compression and the resilient action can be provided on two opposite side surfaces of the grounding lug body 31, and the grounding lug 30 is more stably retained in the insertion groove 20 to better establish electric connection.

Optionally, the two bent snap-fit arms of the grounding lug 30 may alternatively be bent backwards from the front end 311 of the grounding lug body 31 towards the two opposite side edges 312 (marked in FIG. 5) of the grounding lug body 31. Alternatively, the grounding lug 30 may include four bent snap-fit arms extending from the front end 311. Two bent snap-fit arms close to the side edge 312 are bent backwards towards the corresponding side edge 312, and two middle bent snap-fit arms are bent backwards towards the opposite side surfaces of the grounding lug body 31 respectively. The specific number and arrangement positions of the bent snap-fit arms in the above embodiments are not limited, and can be can selected, combined, or modified by those skilled in the art according to demand.

As shown in FIG. 4 and FIG. 5, in another preferred illustrative embodiment, the snap-fit arm 32 includes at least one protruding snap-fit arm 322 obliquely extending from a side edge 312 of the grounding lug body 31 backwards in the insertion direction. According to an actual size of the grounding lug 30, a plurality of protruding snap-fit arms may be formed at each side edge 312 of the grounding lug body 31. Preferably, two protruding snap-fit arms 322 are formed at each side edge 312 of the grounding lug body 31. Preferably, the protruding snap-fit arm 322 has a conical degree that gradually decreases in size as the protruding snap-fit arm approaches a rear end in the insertion direction. Thus, when the grounding lug 30 is inserted, the protruding snap-fit arm 322 can be easily compressed, and the grounding lug 30 can be advantageously inserted into the insertion groove 20.

However, after being inserted, due to the resilient action of the protruding snap-fit arm 322, the tail end, especially a sharp tail end, can be fully snap-fitted and stopped on the inner wall of the insertion groove 20 and be in close contact with the inner wall of the insertion groove 20. Thus, the grounding lug 30 is installed and fixed in the insertion groove 20, and stable electric connection can be established. The configuration of the grounding lug 30 is not limited to the two illustrative embodiments. For example, the snap-fit arms 32 of the grounding lug 30 may include the bent snap-fit arm 321 and the protruding snap-fit arm 322. The numbers and arrangement positions of the snap-fit arms may be adjusted according to demand. For example, the protruding snap-fit arms 322 may alternatively protrude from the side surface (at positions that do not coincide with positions of the bent snap-fit arms) of the grounding lug body 31, and each side surface may be provided with a plurality of bent snap-fit arms 321 and/or protruding snap-fit arms 322.

For the embodiments, advantageously, an internal size, on a scale on which the grounding lug 30 is suitable to be elastically compressed, of the insertion groove 20 is less than an uncompressed natural size of the grounding lug 30 on the corresponding scale. For example, an opening gap of the insertion groove 20 is merely slightly greater than a minimum compression thickness and/or a minimum compression width of the grounding lug 30 including the elastic structure. In addition, at an opening edge of an opening 21 of the insertion groove 20, a step protruding towards an interior of the opening 21 is formed at least a section corresponding to the snap-fit arm 32, thus further preventing the grounding lug 30 from falling out of the insertion groove 20.

In an optional embodiment, the grounding structure is arranged at the driving device installation portion 12. Preferably, the insertion groove 20 is formed in a side, farther away from the end cover body 11, of the driving device installation portion 12, particularly the opening facing away from the end cover body 11. Such a design can be conducive to installation and arrangement of the grounding lug and a grounding wire harness connected to the grounding lug.

In an optional embodiment, the insertion groove 20 is formed by removing part of the conductive material of the electric motor end cover 10. That is, for the electric motor according to the utility model, the grounding structure can be formed by a simple and low-cost method.

In addition, the reinforcement rib 14 may alternatively be connected to the insertion groove 20. According to actual application of the electric motor, the reinforcement ribs 14 connected to the driving device installation portion 12 and the insertion groove 20 can additionally provide a shielding effect against water and/or dust, and protect the driving device and the grounding structure.

The utility model further provides a household appliance, such as a washing machine. The household appliance has the electric motor for a household appliance according to any embodiment described above of the utility model. A grounding lug is connected to a grounding device through a wire.

Although specific implementation solutions have been described above, these implementation solutions are not intended to limit the disclosure scope of the utility model, even if a single implementation solution is described with respect to specific features. The feature examples provided in the utility model publication are intended to be illustrative rather than limitative, unless otherwise stated. In the specific implementation, according to the actual demand, a plurality of features can be combined with each other if technically feasible. Various substitutions, changes and transformations are conceivable without departing from the spirit and scope of the utility model.

## Claims

1. An electric motor for a household appliance, **characterized by** comprising:
an electric motor end cover (10); and
a grounding structure, wherein the grounding structure comprises: an insertion groove (20), the insertion groove (20) being provided in the electric motor end cover (10); and a conductive grounding lug (30), the grounding lug (30) being suitable to be inserted into the insertion groove (20) and establish electric connection to the insertion groove (20), wherein
the grounding lug (30) is provided with a resilient elastic structure at an edge, the elastic structure is elastically compressible on at least one scale in a transverse direction relative to an insertion direction in which the grounding lug (30) is inserted into the insertion groove (20), and the grounding lug (30) in an inserted state of being inserted into the insertion groove (20) is locked in the insertion groove (20) with the aid of resilient action of the elastic structure.

2. The electric motor for a household appliance according to claim 1, **characterized in that**
the grounding lug (30) has a plate-like grounding lug body (31), the elastic structure comprises at least one snap-fit arm (32) integrally protruding from the grounding lug body (31), and the grounding lug (30) is inserted into the insertion groove (20) through elastic deformation of the snap-fit arm (32) and is snap-fitted in the insertion groove (20) with the aid of resilient action of the elastically deformed snap-fit arm (32).

3. The electric motor for a household appliance according to claim 2, **characterized in that**
the snap-fit arm (32) comprises at least one bent snap-fit arm (321) that extends from a front end (311), in the insertion direction, of the grounding lug body (31) and bends and extends backwards in the insertion direction.

4. The electric motor for a household appliance according to claim 3, **characterized in that**
the bent snap-fit arm (321) has a bent connection portion (3211) that is integrally connected to the grounding lug body (31) and bends backwards, and a snap-fit portion (3212) extending from the bent connection portion (3211), and an included angle between the snap-fit portion (3212) and the grounding lug body (31) is an acute angle; and/or
the grounding lug (30) has two bent snap-fit arms (321), and the two bent snap-fit arms (321) are bent backwards from the front end (311) towards an opposite side surface of the grounding lug body (31).

5. The electric motor for a household appliance according to any one of claims 2 to 4, **characterized in that**
the snap-fit arm (32) comprises at least one protruding snap-fit arm (322) obliquely extending from a side edge (312) of the grounding lug body (31) backwards in the insertion direction.

6. The electric motor for a household appliance according to claim 5, **characterized in that**
two protruding snap-fit arms (322) are formed at each side edge (312) of the grounding lug body (31); and/or
the protruding snap-fit arm (322) has a conical degree that gradually decreases in size as the protruding snap-fit arm approaches a rear end in the insertion direction.

7. The electric motor for a household appliance according to any one of claims 1 to 4 and 6, **characterized in that**
an internal size, on a scale on which the grounding lug (30) is suitable to be elastically compressed, of the insertion groove (20) is less than an uncompressed natural size of the grounding lug (30) on the corresponding scale; and/or
at an opening edge of an opening (21) of the insertion groove (20), a step protruding towards an interior of the opening (21) is formed at least a section corresponding to the snap-fit arm (32).

8. The electric motor for a household appliance according to any one of claims 1 to 4 and 6, **characterized in that**
the electric motor end cover (10) comprises an end cover body (11), a driving device installation portion (12) arranged on the end cover body (11) and used for installing an electric motor driving device, and a plurality of heat dissipation ribs (13) protruding from an outer surface of the end cover body (11).

9. The electric motor for a household appliance according to claim 8, **characterized in that**
the end cover body (11), the driving device installation portion (12), and the heat dissipation ribs (13) are in an integral forming structure; and/or
the driving device installation portion (12) is formed to protrude from a side of the end cover body (11) farther away from the end cover body (11); and/or
a bearing chamber (111) is formed on the end cover body (11); and/or
the grounding structure is arranged at the driving device installation portion (12).

10. The electric motor for a household appliance according to claim 9, **characterized in that**
the insertion groove (20) is formed in a side, farther away from the end cover body (11), of the driving device installation portion (12); and/or
the electric motor end cover (10) further comprises reinforcement ribs (14) protruding from the end cover body (11) in a greater extent than the plurality of heat dissipation ribs (13).

11. The electric motor for a household appliance according to claim 10, **characterized in that**
the reinforcement rib (14) is formed to be connected to the driving device installation portion (12) and/or the insertion groove (20).

12. The electric motor for a household appliance according to any one of claims 1 to 4, 6 and 9 to 11, **characterized in that**
the electric motor end cover (10) is at least partially made from a conductive material; wherein
the grounding lug (30) is inserted into the insertion groove (20) and establish electric connection to the electric motor end cover (10); and/or
the insertion groove (20) is formed by removing part of the conductive material of the electric motor end cover (10).

13. A household appliance, **characterized by** having the electric motor for a household appliance according to any one of claims 1 to 12, wherein a grounding lug is connected to a grounding device through a wire.
